# EUROPÄISCHE PATENTSCHRIFT

(11) **EP 1 647 438 B1**
(45) Veröffentlichungstag und Bekanntmachung des Hinweises auf die Patenterteilung: **22.10.2008**
(21) Anmeldenummer: 05020853.7
(22) Anmeldetag: 24.09.2005
(51) Int. Cl.: B60N 2/225

(54) **Getriebebeschlag für einen Fahrezeugsitz**
Geared fitting for a vehicle seat
Ferrure à engrenage pour un siège de véhicule

(30) Priorität: 15.10.2004 DE 102004050152
(43) Veröffentlichungstag der Anmeldung: 19.04.2006
(73) Patentinhaber: KEIPER GmbH & Co. KG, 67657 Kaiserslautern (DE)
(72) Erfinder: Dill, Thomas, 67699 Heiligenmoschel (DE); Schäffling, Ulf, 67822 Gaugrehweiler (DE); Enns, Viktor, 67655 Kaiserslautern (DE)
(74) Vertreter: Patentanwälte Hosenthien-Held und Dr. Held

(56) Entgegenhaltungen:
- EP-A- 1 145 897
- US-A- 5 277 672
- US-A- 5 536 217

## Beschreibung

Die Erfindung betrifft einen Getriebebeschlag für einen Fahrzeugsitz, insbesondere für einen Kraftfahrzeugsitz, mit den Merkmalen des Oberbegriffs des Anspruches 1.

Bei einem aus der US 5,536,217 A (beinhaltet die Merkmale des Oberbegriffs des Anspruchs 1) bekannten Getriebebeschlag wird das Ritzel durch einen mehrteiligen Exzenter angetrieben, welcher aus zwei bezüglich der Drehachse axial versetzt zueinander angeordneten, exzentrisch auf einem Mitnehmer gelagerten und durch eine Feder gegeneinander vorgespannten Scheiben besteht. Dabei sind die beiden Scheiben in axialer Richtung vollständig innerhalb des Ritzels angeordnet. Durch Toleranzen bedingt kann zwischen den einander lagernden Hohlrädem, zwischen dem den Mitnehmer lagernden ersten Hohlrad und dem Ritzel und zwischen dem Ritzel und dem zweiten Hohlrad jeweils ein Spiel auftreten, also insgesamt drei Möglichkeiten für ein Spiel. Mittels des mehrteiligen Exzenters kann das Spiel zwischen dem ersten Hohlrad und dem Ritzel ausgeglichen werden.

Aus der EP 1 145 897 A2 ist ein Getriebebeschlag der eingangs genannten Art bekannt, bei dem das Ritzel und das zweite Hohlrad auf Lagerscheiben gelagert sind. An einer Lagerscheibe ist ein Keil und an der anderen Lagerscheibe eine dazu passende Schräge vorgesehen, welche von einer Feder axial beaufschlagt sich radial zueinander verschieben, um das Spiel zwischen Ritzel und zweitem Hohlrad auszugleichen.

Der Erfindung liegt die Aufgabe zu Grunde, einen Getriebebeschlag der eingangs genannten Art zu verbessern, insbesondere hinsichtlich des Spielausgleichs. Diese Aufgabe wird erfindungsgemäß durch einen Getriebebeschlag mit den Merkmalen des Anspruches 1 gelöst. Vorteilhafte Ausgestaltungen sind Gegenstand der Unteransprüche.

Das erste Keilsystem definiert den Exzenter wenigstens teilweise und wirkt zum Spielausgleich zwischen dem ersten Hohlrad und dem dem Ritzel wirkt. Indem bezüglich der Drehachse axial versetzt zum Exzenter wenigstens ein zweites Keilsystem vorgesehen ist, welches zwischen dem einem der Hohlräder und dem anderen Hohlrad und/oder dem Ritzel wirkt, steht gegenüber dem Stand der Technik eine alternative Möglichkeit zum Spielausgleich zur Verfügung, welcher vorzugsweise durch radiale Relativverschiebungen erfolgt. Der Spielausgleich bewirkt ein starke Verringerung der Geräuschbildung, beispielsweise eines Klackens beim Einsitzen in den Fahrzeugsitz. Durch die beiden Keilsysteme werden zwei Spiele ausgeglichen, und das dritte Spiel zumindest reduziert. Dies unterscheidet die erfindungsgemäß vorgesehenen Keilsystem von solchen Keilsystemen, wie sie beispielsweise für vereinfacht aufgebaute Taumelgetriebe oder für Planetengetriebe ohne gegenseitige Lagerung der Hohlräder verwendet werden, bei denen aufgrund anderer Bauteile und/oder anderer Lagerungsart andere Verhältnisse vorliegen, insbesondere weniger Möglichkeiten für ein Auftreten von Spiel bestehen. Jedes vorgesehene Keilsystem weist zwei im wesentlich in einer Ebene angeordnete, d.h. im Vergleich zu ihrer axialen Dicke allenfalls wenig in axialer Richtung zueinander versetzte, bogenförmige Keilsegmente, die in bevorzugten Ausführungen viertels- bis halbbogenförmig sind, und eine wenigstens ein Keilsegment beaufschlagende Feder auf.

Vorzugsweise sitzt das zweite Hohlrad gleitend auf einer Scheibe, welche wenigstens teilweise durch das Keilsystem definiert und im wesentlichen fluchtend mit der Drehachse (zentrisch) angeordnet ist, wobei Abweichungen spielbedingt sind. Das Keilsystem wirkt dann zum Spielausgleich zwischen dem zweiten Hohlrad und dem ersten Hohlrad und/oder dem Ritzel. Bei einer einzigen Wirkrichtung wird das kleinere der beiden Spiele ausgeglichen und das größere Spiel um den gleichen Betrag reduziert.

Der Antrieb des Exzenters erfolgt vorzugsweise durch einen Mitnehmer, der mittels eines ersten Lagerabschnitts im ersten Hohlrad gelagert ist und bei einer Drehung um die Drehachse den Exzenter mitnimmt, beispielsweise aufgrund von Formschlußt. Ein zweiter Lagerabschnitt des Mitnehmers kann beispielsweise wenigstens teilweise den Exzenter und/oder ein dritter Lagerabschnitt des Mitnehmers wenigstens teilweise die Scheibe definieren, wodurch die Mitnahme zwangsläufig erfolgt. Der Kraftfluß für den Spielausgleich verläuft dann einerseits vom Mitnehmer über das Keilsystem zum Ritzel weiter zum gestellseitigen Hohlrad und zurück zum Mitnehmer und andererseits vom Mitnehmer über das Keilsystem zum zweiten Hohlrad und weiter zum Ritzel oder zum ersten Hohlrad und zurück zum Mitnehmer.

In Kombination mit den Keilsegmenten kann in bevorzugter Ausführung ein Segment eines Lagerabschnitts des Mitnehmers oder ein auf dem Lagerabschnitt angeordneter Mitnehmerring zum einen zwischen die Schmalseiten der Keilsegmente fassen und zum anderen die Keilsegmente an ihrer gekrümmten Innenfläche lagern, während die Feder zwischen die einander zugekehrten Breitseiten der Keilsegmente greift. Die gekrümmte Außenfläche der Keilsegmente liegt dann gleitend am Ritzel oder am zweiten Hohlrad an. Bei der Lösung mit zwei Keilsystemen sind diese vorzugsweise bezüglich der Drehachse auf radial gegenüberliegenden Seiten und axial versetzt zueinander angeordnet.

Bei einer Lösung mit einem in zwei Ebenen wirksamen Keilsystem sind die Keilsegmente vorzugsweise in axialer Richtung der Drehachse geringfügig versetzt angeordnet und weisen an den einander zugewandten Stirnseiten aneinander anliegende Keilflächen auf, welche schräg zur Drehachse in einem Winkel verlaufen, der außerhalb des Selbsthemmungsbereichs liegt. Eine Beaufschlagung eines der Keilsegmente in axialer Richtung durch eine einzige Feder, direkt oder indirekt über ein Druckstück, wird dann mittels der schrägen Keilflächen in eine radialer Bewegung oder Kraftausübung der Keilsegmente umgesetzt.

Der erfindungsgemäße Getriebebeschlag ist beispielsweise als Neigungseinsteller für ein Sitzkissen eines Fahrzeugsitzes einsetzbar, wo er mit einem einfachen Gelenk zusammen eine Schwenkbewegung definiert. Es ist aber auch denkbar, den erfindungsgemäßen Getriebebeschlag für andere Einstellungen, beispielsweise der Lehne, zu verwenden, wobei dann zwei Getriebebeschläge über eine gemeinsame Übertragungsstange angetrieben werden. Ein Einsatz kann auch zur Realisierung einer zusätzlichen Schwenkachse einer Knick-Lehne erfolgen.

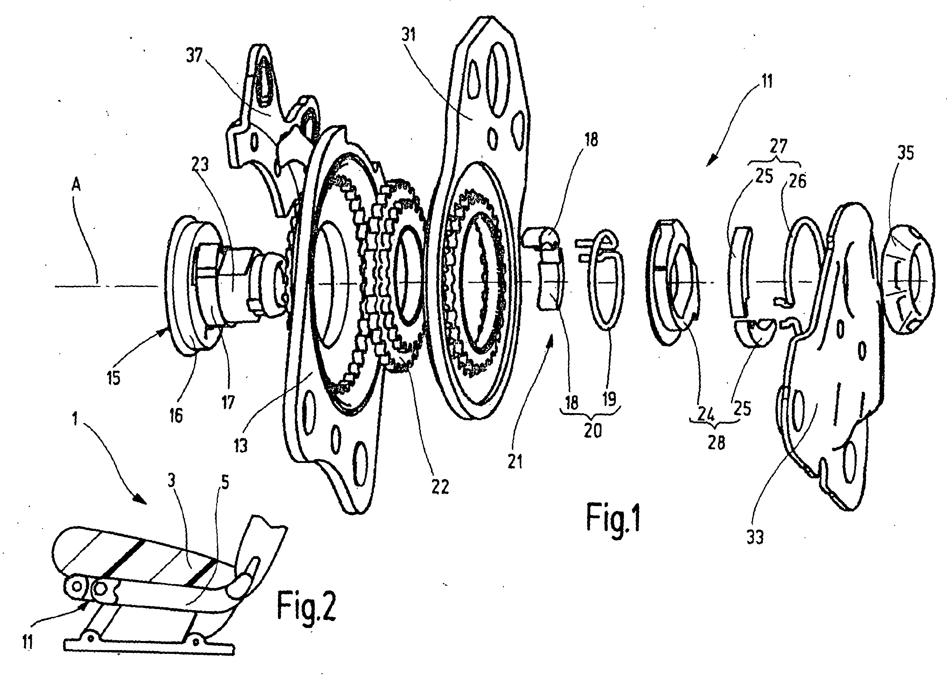

Im folgenden ist die Erfindung anhand eines in der Zeichnung dargestellten Ausführungsbeispiels näher erläutert. Es zeigen
- Fig. 1: eine Explosionsdarstellung des Ausführungsbeispiels,
- Fig. 2: eine teilweise geschnittene, schematisierte Teilansicht eines Fahrzeugsitzes,

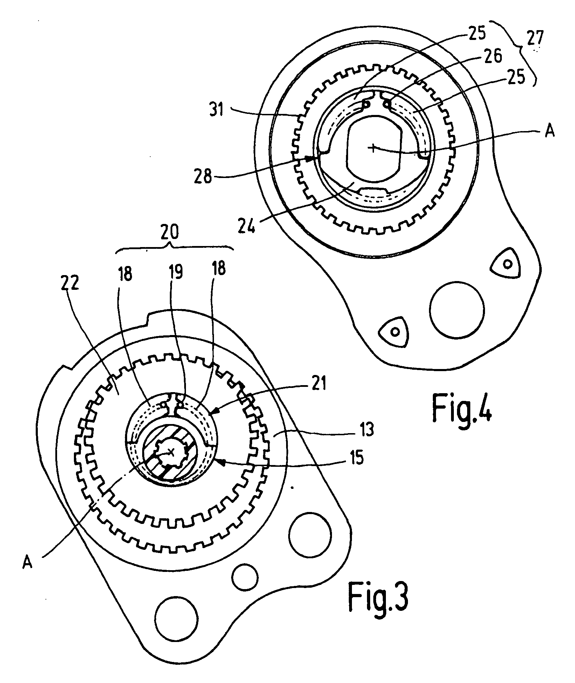

- Fig. 3: eine Teilansicht des Ausführungsbeispiels in der Ebene des Exzenters, und
- Fig. 4: eine Teilansicht des Ausführungsbeispiels in der Ebene der Scheibe.

Bei einem Fahrzeugsitz 1 ist das auf einer Sitzschale angebrachte Sitzkissen 3 in seiner Neigung relativ zum Sitzrahmen 5 einstellbar. Hierfür ist eine als Rohr ausgebildete Quertraverse, welche das Vorderteil des Sitzrahmens 5 bildet, an den vorderen Enden der beiden Seitenteile des Sitzrahmens 5 schwenkbar angelenkt, und zwar auf einer Seite (vorliegend tunnelseitig) mittels eines einfachen Gelenks, in dessen Bereich zugleich auch eine Kompensationsfeder angeordnet ist, und auf der anderen Seite (vorliegend schwellerseitig) mittels eines Getriebebeschlags 11. Durch die Schwenkbewegung der Quertraverse wird die Höhe der Vorderkante des Sitzkissens 3 und damit die Neigung des Sitzkissens 3 geändert. Der Einbau des Getriebebeschlags 11 und dessen prinzipieller Aufbau, soweit nachfolgend nicht abweichend beschrieben, entsprechen denen in der DE 103 05 407 A1, deren Offenbarungsgehalt ausdrücklich einbezogen wird.

Im Ausführungsbeispiel weist der Getriebebeschlag 11 ein erstes, gestellseitiges Hohlrad 13 zur Befestigung am Seitenteil des Sitzrahmens 5 auf In einer zentralen Öffnung des gestellseitigen Hohlrades 13 ist ein Mitnehmer 15 aus Kunststoff mit einem ersten Lagerabschnitt 16 drehbar gelagert, wobei die Drehachse A des Mitnehmers 15 das nachfolgend verwendete Zylinderkoordinatensystem definiert. Am ersten Lagerabschnitt 16 ist ein Flansch angeformt, welcher an der Außenseite des gestellseitigen Hohlrades 13 anliegt.

An den ersten Lagerabschnitt 16 des einstückig ausgebildeten Mitnehmers 15 schließt sich in axialer Richtung auf der vom Flansch abgewandten Seite ein zweiter Lagerabschnitt 17 an, welcher zum einen als Mitnehmersegment ausgebildet ist und mit Spiel zwischen die Schmalseiten zweier bogenförmiger erster Keilsegmente 18 fasst und zum anderen die ersten Keilsegmente 18 an ihren gekrümmten Innenflächen lagert. Die einander zugekehrten Breitseiten der ersten Keilsegmente 18 nehmen mit je einer durch vorspringende Materialpartien definierten Ausnehmung jeweils einen in axialer Richtung abgewinkelten Endfinger einer ersten Ringfeder 19 auf, welche die ersten Keilsegmente 18 in Umfangsrichtung auseinanderdrückt. Die beiden ersten Keilsegmente 18 und die erste Ringfeder 19 definieren ein erstes Keilsystem 20.

Zudem definieren der zweite Lagerabschnitt 17 und die beiden ersten Keilsegmente 18, welche alle drei in einer Ebene angeordnet sind, zusammen einen Exzenter 21, d.h. der Mittelpunkt dieses von einer Kreislinie umschriebenen Exzenters 21 ist radial versetzt zur Drehachse A angeordnet. Der längste Teil der ersten Ringfeder 19 ist in einer zum Exzenter 21 parallelen, axial versetzten Ebene angeordnet. Auf diesem Exzenter 21, d.h. auf den gekrümmten Außenflächen der ersten Keilsegmente 18, sitzt gleitend ein Ritzel 22, welches im Getriebebeschlag 11 als Planetenrad dient.

Das Ritzel 22 kämmt mittels einer ersten Außenverzahnung eine in einem vertieften Bauraum vorgesehene Innenverzahnung des gestellseitigen Hohlrades 13, wobei die Anzahl der Zähne sich um wenigstens eins unterscheidet und der Außendurchmesser des Ritzels 22 (d.h. der Kopfkreisdurchmesser von dessen Verzahnung) um wenigstens eine Zahnhöhe geringer ist als der Innendurchmesser des gestellseitigen Hohlrades 13 (d.h. der Fußkreisdurchmesser von dessen Innenverzahnung).

An den zweiten Lagerabschnitt 17 des Mitnehmers 15 schließt sich in axialer Richtung auf der vom ersten Lagerabschnitt 16 abgewandten Seite ein konzentrisch zur Drehachse A angeordneter dritter Lagerabschnitt 23 an, welcher allerdings als Zweikant ausgebildet ist. Auf dem dritten Lagerabschnitt 23 sitzt fest ein Mitnehmerring 24 aus Kunststoff, welcher wie der zweite Lagerabschnitt 17 zum einen mit Spiel zwischen die Schmalseiten zweier bogenförmiger zweiter Keilsegmente 25 fasst und zum anderen die zweiten Keilsegmente 25 an ihren gekrümmten Innenflächen lagert. Die einander zugekehrten Breitseiten der zweiten Keilsegmente 25 nehmen mit je einer durch vorspringende Materialpartien definierten Ausnehmung jeweils einen in axialer Richtung abgewinkelten Endfinger einer zweiten Ringfeder 26 auf, welche die zweiten Keilsegmente 25 in Umfangsrichtung auseinanderdrückt. Die beiden zweiten Keilsegmente 25 und die zweite Ringfeder 26 definieren ein zweites Keilsystem 27, welches bezüglich der Drehachse A axial versetzt zum Exzenter 21 ist.

Zudem definieren der Mitnehmerring 24 und die beiden zweiten Keilsegmente 25, welche alle drei in einer Ebene angeordnet sind, zusammen eine Scheibe 28, die von einer Kreislinie umschrieben wird, deren Mittelpunkt wenigstens näherungsweise auf der Drehachse A angeordnet ist. Dabei sind die zweiten Keilsegmente 25 und die ersten Keilsegmente 18 bezüglich der Drehachse A auf radial gegenüberliegenden Seiten angeordnet. Der längste Teil der zweiten Ringfeder 26 ist in einer zur Scheibe 28 parallelen, axial versetzten Ebene angeordnet, ungefähr bei der ersten Ringfeder 19. Auf der Scheibe 28, d.h. auf den gekrümmten Außenflächen der zweiten Keilsegmente 25, sitzt gleitend ein zweites, abtriebsseitiges Hohlrad 31, welches radial außen im gestellseitigen Hohlrad 13 gelagert ist.

Das Ritzel 22 kämmt mit einer gegenüber der ersten Außenverzahnung axial versetzten zweiten Außenverzahnung eine in einem vertieften Bauraum vorgesehene Innenverzahnung des abtriebsseitigen Hohlrades 31, wobei die Anzahl des Zähne sich um wenigstens eins unterscheidet. Die Unterschiede der Durchmesser entsprechen denjenigen im Verhältnis zum gestellseitigen Hohlrad 13, jedoch sind die Durchmesser - absolut gesehen - geringer, so dass das Ritzel 22 eine Übersetzung der Drehbewegung vornimmt. Die beiden Hohlräder 13 und 31 umschließen das Ritzel 22 vollständig und liegen in dem radial außerhalb davon angeordneten Bereich flächig aneinander an.

Die Lagerung der Hohlräder 13 und 31 zueinander kann in abgewandelter Ausführung so ausgelegt sein, dass dort selbst unter Wirkung der zweiten Keilsegmente 25 eine Restluft verbleibt. Das abtriebsseitige Hohlrad 31 ist dann nur über die zweiten Keilsegmente 25 und den Wälzpunkt mit dem Ritzel gelagert. Allenfalls im Crash entsteht dann unter großer Verformung ein Kontakt der beiden Hohlräder 13 und 31.

Entsprechend dem Aufbau, wie er in der DE 103 05 407 A1 beschrieben ist, übergreift eine an der Außenseite des Getriebebeschlags 11 angeordnete gestellseitige Halteklammer 33, welche am gestellseitigen Hohlrad 13 angebracht ist, das abtriebsseitige Hohlrad 31 unter Zwischenlage eines Gleiters aus Kunststoff und lagert den Mitnehmer 15 drehbar, so dass dieser zusätzlich abgestützt ist. An dem vom Flansch abgewandten Ende des Mitnehmers 15 ist ein Ring 35 aus Kunststoff formschlüssig und mit radialer Vorspannung aufgeclipst. Eine abtriebsseitige Halteklammer 37 ist am abtriebsseitigen Hohlrad 31 angebracht und übergreift das gestellseitige Hohlrad 13 unter Zwischenlage eines Gleiters aus Kunststoff. Die Halteklammern 33 und 37 und der Mitnehmer 15 mit dem aufgeclipsten Ring bilden axiale Verklammerungen, welche die im Crashfall neben den Kräften in Umfangsrichtung des Getriebebeschlags auch in Querrichtung des Sitzrahmens 5, also in axialer Richtung des Getriebebeschlags 11, auftretenden, starken Kräfte sicher aufnehmen können, beispielsweise bis zu einigen kN.

Der Getriebebeschlag 11 wird durch Drehung des Mitnehmers 15 angetrieben, der dann den ersten Exzenter 21 dreht, welcher wiederum eine Abwälzbewegung des Ritzels 22 am gestellseitigen Hohlrad 13 bewirkt. Das erste Keilsystem 20 sorgt für einen (vollständigen) Ausgleich des Spiels, welches zwischen dem gestellseitigen Hohlrad 13 und dem Ritzel 22 (aufgrund von Toleranzen) vorhanden ist, d.h. das gestellseitige Hohlrad 13 und das Ritzel 22 werden zueinander spielfrei durch eine radiale Relativverschiebung von Mitnehmer 15 und Ritzel 22. Das Ritzel 22 bewirkt wiederum eine Abwälzbewegung des abtriebsseitigen Hohlrades 31. Das zweite Keilsystem 27 ist in einer dem ersten Keilsystem 20 entgegengesetzten Richtung wirksam und sorgt für eine radiale Relativverschiebung von Mitnehmer 15 und abtriebsseitigem Hohlrad 31. Von dem zwischen dem Ritzel 22 und dem abtriebsseitigen Hohlrad 31 (aufgrund von Toleranzen) vorhandenen Spiel und dem zwischen dem gestellseitigen Hohlrad 13 und dem abtriebsseitigen Hohlrad 31 (aufgrund von Toleranzen) vorhandenen Spiel beseitigt das zweite Keilsystem 27, welches in einer dem ersten Keilsystem 20 entgegengesetzten Richtung wirksam ist und für eine radiale Relativverschiebung von Mitnehmer 15 und abtriebsseitigem Hohlrad 31 sorgt, das kleinere der beiden Spiele (vollständig) und reduziert das andere Spiel um den gleichen Betrag.

Betrachtet man die Situation unter dem Gesichtspunkt der Kräfte, so üben beide Keilsysteme 20 und 27 radiale Kräfte aus, deren Richtungen einander entgegengesetzt sind, das erste Keilsystem 20 wirkt unmittelbar auf das Ritzel 22. Das zweite Keilsystem 27 wirkt mittelbar über das abtriebsseitige Hohlrad 31 ebenfalls auf das Ritzel 22. Die Kraft auf das Ritzel 22, die aus dem ersten Keilsystem 27 resultiert, ist so eingestellt, dass sie größer ist als die Kraft, die aus dem zweiten Keilsystem 27, da sonst die radiale Verschiebung des Ritzels 22 aufgrund des ersten Keilsystems 20 möglicherweise durch die Verschiebung aufgrund des zweiten Keilsystems 27 teilweise aufgehoben wird. Die Parameter zum Einstellen der aufgrund der Keilsysetme 20 und 27 im Getriebebeschlag 11 wirksamen radialen Kräfte sind die jeweiligen Federkräfte, die Keilwinkel sowie die Reibeigenschaften der Kontaktflächen.

Zum Antrieb des Mitnehmers 15 ist in an sich bekannter Weise eine profilierte Welle, die formschlüssig in eine ebenfalls profilierte, den Mitnehmer 15 zentral in axialer Richtung durchsetzende, mit der Drehachse A fluchtende Aufnahme gesteckt ist, und ein Handrad vorgesehen, welches mit der Welle einstückig ausgebildet sein kann.

### Bezugszeichenliste

- 1: Fahrzeugsitz
- 3: Sitzkissen
- 5: Sitzrahmen
- 11: Getriebebeschlag
- 13: gestellseitiges Hohlrad, erstes Hohlrad
- 15: Mitnehmer
- 16: erster Lagerabschnitt
- 17: zweiter Lagerabschnitt
- 18: erstes Keilsegment
- 19: erste Ringfeder
- 20: erstes Keilsystem
- 21: Exzenter
- 22: Ritzel
- 23: dritter Lagerabschnitt
- 24: Mitnehmerring
- 25: zweites Keilsegment
- 26: zweite Ringfeder
- 27: zweites Keilsystem
- 28: Scheibe
- 31: abtriebsseitiges Hohlrad, zweites Hohlrad
- 33: gestellseitige Halteklammer
- 35: Ring
- 37: abtriebsseitige Halteklammer
- A: Drehachse

## Patentansprüche

1. Getriebebeschlag für einen Fahrzeugsitz, insbesondere für einen Kraftfahrzeugsitz, mit
a) einem ersten Hohlrad (13),
b) einem um eine Drehachse (A) drehbaren Exzenter (21),
c) einem vom Exzenter (21) angetriebenen, das erste Hohlrad (13) kämmenden Ritzel (22),
d) einem vom Ritzel (22) gekämmten zweiten Hohlrad (31), welches am ersten Hohlrad (13) gelagert ist, und
e) wenigstens einem Keilsystem (27), welches zum Spielausgleich zwischen dem einen der Hohlräder (13, 31) und dem anderen Hohlrad (13, 31) und/oder dem Ritzel (22) wirkt,
**dadurch gekennzeichnet, dass**
f) der Exzenter (21) wenigstens teilweise durch ein erstes Keilsystem (20) definiert ist, welches zum Spielausgleich zwischen dem ersten Hohlrad (13) und dem Ritzel (22) wirkt, und dass
g) bezüglich der Drehachse (A) axial versetzt zum Exzenter (21) ein zweites Keilsystem (27) vorgesehen ist, wobei
h) jedes vorgesehene Keilsystem (20, 27) zwei im wesentlich in einer Ebene angeordnete, bogenförmige Keilsegmente (18, 25) und eine wenigstens ein Keilsegment (18, 25) beaufschlagende Feder (19, 26) aufweist.

2. Getriebebeschlag nach Anspruch 1, **dadurch gekennzeichnet, dass** das zweite Hohlrad (31) gleitend auf einer Scheibe (28) sitzt, welche wenigstens teilweise durch das zweite Keilsystem (27) definiert und im wesentlichen zentrisch zur Drehachse (A) angeordnet ist, wobei das zweite Keilsystem (27;) zum Spielausgleich zwischen dem zweiten Hohlrad (31) und dem ersten Hohlrad (13) und/oder dem Ritzel (22) wirkt.

3. Getriebebeschlag nach einem der vorhergehenden Ansprüche, **dadurch gekennzeichnet, dass** ein mittels eines ersten Lagerabschnitts (16) im ersten Hohlrad (13) gelagerter Mitnehmer (15) vorgesehen ist, der bei einer Drehung um die Drehachse (A) den Exzenter (21) mitnimmt.

4. Getriebebeschlag nach Anspruch 3, **dadurch gekennzeichnet, dass** ein zweiter Lagerabschnitt (17) des Mitnehmers (15) wenigstens teilweise den Exzenter (21) und/oder ein dritter Lagerabschnitt (23) des Mitnehmers (15) wenigstens teilweise die Scheibe (28) definiert.

5. Getriebebeschlag nach Anspruch 4, **dadurch gekennzeichnet, dass** ein Segment eines Lagerabschnitts (17) des Mitnehmers (15) oder ein auf dem Lagerabschnitt (23) angeordneter Mitnehmerring (24) zum einen zwischen die Schmalseiten der Keilsegmente (18, 25) fasst und zum anderen die Keilsegmente (18, 25) an ihrer gekrümmten Innenfläche lagert, während die Feder (19, 26) zwischen die einander zugekehrten Breitseiten der Keilsegmente (18, 25) greift.

6. Getriebebeschlag nach Anspruch 5, **dadurch gekennzeichnet, dass** die Keilsegmente (18) des einen Keilsystems (20) und die Keilsegmente (25) des anderen Keilsystems (27) bezüglich der Drehachse (A) auf radial gegenüberliegenden Seiten angeordnet sind.

7. Fahrzeugsitz mit einem Sitzkissen (3), dessen Neigung durch einen Getriebebeschlag nach einem der vorhergehenden Ansprüche einstellbar ist.

## Claims

1. A geared fitting for a vehicle seat, in particular for a motor vehicle seat, having
a) a first internal gear wheel (13),
b) an eccentric (21) rotatable about an axis of rotation (A),
c) a pinion (22) driven by the eccentric (21) and meshing with the first internal gear wheel (13),
d) a second internal gear wheel (31) in which the pinion (22) meshes, said second internal gear wheel being mounted on the first internal gear wheel (13), and
e) at least one wedge system (27), which compensates for the play between one of the internal gear wheels (13, 31) and the other internal gear wheel (13, 31) and/or the pinion (22),
**characterised in that**
f) the eccentric (21) is defined at least partially by a first wedge system (20), which compensates for the play between the first internal gear wheel (13) and the pinion (22), and **in that**
g) a second wedge system (27) is provided axially offset from the eccentric (21) with respect to the axis of rotation (A), wherein
h) each wedge system (20, 27) provided comprises two arcuate wedge segments (18, 25) arranged substantially in one plane, and a spring (19, 26) bearing on at least one wedge segment (18, 25).

2. A geared fitting according to claim 1, **characterised in that** the second internal gear wheel (31) is slidingly located on a disc (28), which is defined at least partially by the second wedge system (27) and is arranged substantially centrically with respect to the axis of rotation (A), wherein the second wedge system (27) compensates for the play between the second internal gear wheel (31) and the first internal gear wheel (13) and/or the pinion (22).

3. A geared fitting according one of the preceding claims, **characterised in that** a driver (15) mounted in the first internal gear wheel (13) by means of a first bearing section (16) is provided, said driver (15), as it rotates around the axis of rotation (A), taking with it the eccentric (21).

4. A geared fitting according to claim 3, **characterised in that** a second bearing section (17) of the driver (15) defines at least partially the eccentric (21), and/or in that a third bearing section (23) of the driver (15) defines at least partially the disc (28).

5. A geared fitting according to claim 4, **characterised in that** one segment of a bearing section (17) of the driver (15) or a carrier ring (24) arranged on the bearing section (23) engages, on the one hand, between the narrow sides of the wedge segments (18, 25) and, on the other hand, supports the wedge segments (18, 25) on their curved inner surfaces, while the spring (19, 26) reaches between the mutually facing broad sides of the wedge segments (18, 25).

6. A geared fitting according to claim 5, **characterised in that** the wedge segments (18) of the one wedge system (20) and the wedge segments (25) of the other wedge system (27) are arranged on radially opposite sides with respect to the axis of rotation (A).

7. A vehicle seat having a seat cushion (3), the inclination of which is adjustable by means of a geared fitting according to any one of the preceding claims.

## Revendications

1. Armature d'entraînement pour un siège de véhicule, en particulier pour un siège de véhicule automobile, comportant :
(a) une première roue à denture intérieure (13) ;
(b) un excentrique (21) apte à tourner autour d'un axe de rotation (A) ;
(c) un pignon (22) entraîné par l'excentrique (21), entraînant la première roue à denture intérieure (13);
(d) une deuxième roue à denture intérieure (31) entraînée par le pignon (22), laquelle est montée sur la première roue à denture intérieure (13); et
(e) au moins un système de calage (27), lequel agit pour la compensation du jeu entre l'une des roues à denture intérieure (13, 31) et l'autre roue à denture intérieure (13, 31) et/ou le pignon (22),
**caractérisé par le fait que**
(f) l'excentrique (21) est défini au moins en partie par un premier système de calage (20), lequel agit pour la compensation du jeu entre la première roue à denture intérieure (13) et le pignon (22), et que
(g) il est prévu un deuxième système de calage (27) décalé axialement vers l'excentrique (21) par rapport à l'axe de rotation (A), à l'occasion de quoi
(h) chaque système de calage prévu (20, 27) présente deux segments de calage (18, 25) en forme d'arc disposés sensiblement dans un plan et un ressort (19, 26) attaquant au moins un segment de calage (18, 25).

2. Armature d'entraînement selon la revendication 1, **caractérisée par le fait que** la deuxième roue à denture intérieure (31) s'appuie de façon coulissante sur un disque (28), lequel est défini au moins en partie par le deuxième système de calage (27) et est disposé sensiblement de façon centrale par rapport à l'axe de rotation (A), le deuxième système de calage (27) agissant pour la compensation du jeu entre la deuxième roue à denture intérieure (31) et la première roue à denture intérieure (13) et/ou le pignon (22).

3. Armature d'entraînement selon l'une des revendications précédentes, **caractérisée par le fait qu'**il est prévu un organe d'entraînement (15) monté au moyen d'une première section de palier (16) dans la première roue à denture intérieure (13), ledit organe d'entraînement entraînant l'excentrique (21) lors d'une rotation autour de l'axe de rotation (A).

4. Armature d'entraînement selon la revendication 3, **caractérisée par le fait qu'**une deuxième section de palier (17) de l'organe d'entraînement (15) définit au moins partiellement l'excentrique (21) et/ou une troisième section de palier (23) de l'organe d'entraînement (15), au moins partiellement le disque (28).

5. Armature d'entraînement selon la revendication 4, **caractérisée par le fait qu'**un segment d'une section de palier (17) de l'organe d'entraînement (15) ou une bague d'entraînement (24) disposée sur la section de palier (23), d'une part, prend entre les côtés étroits des segments de calage (18, 25) et, d'autre part, supporte les segments de calage (18, 25) sur leur surface intérieure recourbée, pendant que le ressort (19, 26) s'engrène entre les côtés larges tournés l'un vers l'autre des segments de calage (18, 25).

6. Armature d'entraînement selon la revendication 5, **caractérisée par le fait que** les segments de calage (18) d'un système de calage (20) et les segments de calage (25) de l'autre système de calage (27) sont disposés par rapport à l'axe de rotation (A) sur des côtés se faisant face radialement .

7. Siège de véhicule présentant un coussin de siège (33) dont l'inclinaison est apte à être réglée par une armature d'entraînement telle que définie à l'une des revendications précédentes.
